# EUROPEAN PATENT APPLICATION

(11) **EP 2 883 597 A1**
(43) Date of publication of application: **17.06.2015**
(21) Application number: 13196849.7
(22) Date of filing: 12.12.2013
(51) Int. Cl.: B01D 63/02

(54) **Laser welding joint for dialyzer housings**

(71) Applicant: Gambro Lundia AB, 220 10 Lund (SE)
(72) Inventor: Hertzler, Bernd, 72336 Balingen (DE); Beck, Christof, 72475 Bitz (DE); Blickle, Rainer, 72475 Bitz (DE); Brohm, Franz, 72379 Hechingen (DE); Ermantraut, Stefan, 72336 Balingen (DE); Henle, Roland, 72401 Haigerloch-Stetten (DE); Wagner, Steffen, 72469 Meßstetten (DE)
(74) Representative: Perchenek, Nils

(57) **Abstract**

The present disclosure relates to dialyzers comprising laser-welded joints and to a process for the production of capillary dialyzers which employs laser welding.

## Description

### Technical Field

The present disclosure relates to dialyzers comprising laser-welded joints and to a process for their production which employs laser welding.

### Description of the Related Art

Dialyzers and similar diffusion and/or filtration devices like hemofilters or ultrafilters are used in various treatments of blood. The devices are integrated in a circulation system, wherein blood is taken from a patient and is guided through the devices for treatment, such as filtering and cleaning the blood. Subsequently, the treated blood is returned to the patient.

The devices generally encompass a housing comprising a tubular section with end caps capping the openings at the ends of the tubular section. Usually, a bundle of hollow fiber membranes for cleaning and filtering blood is arranged inside the housing. The end caps comprise an inlet or outlet, respectively, for blood, arranged axially in the center of the end cap.

For assembling the devices, the end caps are positioned on the openings of the housing and the housing and the respective end cap are inseparably joined in order to seal the device. The joint between the end cap and the housing generally is established by bonding, e.g., using an adhesive, or by welding, for instance, ultrasonic welding, high frequency welding, spin welding, or mirror welding.

EP 1 323 462 A2 discloses a filter device having a housing formed of polypropylene, rings formed of polypropylene sealed to the ends of the housing, and end caps formed of polypropylene sealed to the rings at the ends of the housing. It is proposed to use spin welding or laser welding to join the individual parts. While a joining process using spin welding is described in detail in the description, no particulars are given for laser welding.

However, laser welding of dialyzers poses some challenges. Laser welding requires one part to be transmissive to the laser beam and either the other part or the interface to be absorptive to the beam, so that enough heat is generated by the laser beam to melt the material at the interface and create a weld seam. As both the housing and the end caps usually are transmissive to laser beams, this method does not work for state-of-the-art dialyzers. It would be desirable to provide a dialyzer shell that can be laser-welded.

### Summary

The present application provides dialyzers comprising laser-welded joints and a process for their production which employs laser welding. A ring 2 of a thermoplastic polymer comprising an IR-absorptive material is provided at the interface of the housing 3 and the end cap 1. The ring allows for laser-welding the end cap 1 to the housing 3, forming a laser welded-joint in the process.

### Brief Description of the Drawings

- Figure 1: is a bottom view and an exploded cross-sectional view of an end cap 1 of the dialyzer of the invention with a ring 2 of a thermo-plastic polymer comprising an IR-absorptive material;
- Figure 2: is a cross-sectional partial view and a detail view of an embodiment of the dialyzer of the invention;
- Figure 3: is a cross-sectional partial view and a detail view of another embodiment of the dialyzer of the invention.

### Detailed Description

The present invention provides dialyzers comprising laser-welded joints. The laser-welded joints are located at the interfaces of the end caps 1 and the housing 3 and comprise an IR-absorptive material. In one embodiment of the invention, the IR-absorptive material comprises an IR-absorptive pigment selected from the group consisting of carbon black; IR-absorptive inorganic pigments; and IR-absorptive organic pigments. In a particular embodiment, the IR-absorptive material comprises a phthalocyanine. In another particular embodiment, the IR-absorptive material comprises carbon black.

Suitable materials for the housing 3 and the end caps 1 include polycarbonate, acrylonitrile-butadiene-styrene copolymers (ABS), styrene-acrylonitrile copolymers (SAN), styrene-methyl methacrylate copolymers (SMMA), styrenebutadiene-copolymers (SBC), polyolefins, and copolymers and blends thereof. In one embodiment of the invention, the materials of the housing 3 and the end caps 1 comprise polyolefins, polyolefin copolymers, or polyolefin blends. In a particular embodiment of the invention, the polyolefin is polypropylene. The housing 3 and the end caps 1 are comprised of materials substantially transparent to IR light, i.e., they show low absorption in the wavelength range of from 700 to 1500 nm.

The dialyzer of the invention is a capillary dialyzer comprising a tubular housing 3 and an end cap 1 sealing a mouth of the tubular housing 3. An IR-absorptive material is present at the interface of a lip of the tubular housing 3 and the end cap 1. In one embodiment of the invention, a weld seam is present at the interface of the lip of the tubular housing 3 and the end cap 1; and the weld seam comprises the IR-absorptive material.

The lips of the tubular housing 3 are planar and smooth. In one embodiment of the invention, the lips of the tubular housing 3 each form an edge having a width greater than the wall thickness of the tubular housing 3. In one embodiment of the invention, each lip of the tubular housing 3 is sloping downward from the inside of the tubular housing 3 towards its outside at an angle α of from 5° to 15°, e.g., 8° to 12°. This design can be produced with greater accuracy, as the tubular housing 3 usually is cut after the bundle of hollow fibers has been introduced and potted, e.g. with a polyurethane resin, to produce end walls 4. An inclined cut minimizes the distortion of the tubular housing 3 during the cutting step, resulting in smaller dimensional variations along the circumference.

The present invention also provides a process for the production of the laser-welded joints. A ring 2 of a thermoplastic polymer comprising an IR-absorptive material is provided at the interface of the housing 3 and the end cap 1. The ring 2 allows for laser-welding the end cap 1 to the housing 3, a laser-welded joint being formed in the process.

The ring 2 spans the interface of the lip of the tubular housing 3 and the end cap 1, when the end cap 1 is mounted on the tubular housing. The inner diameter of the ring 2 matches the inner diameter of the tubular housing 3, and it extends over the lip of the tubular housing 3. Generally, the width b of the ring 2 is in the range of from 1 mm to 5 mm, for instance, 1.5 mm to 3.5 mm. In one embodiment of the invention, the thickness t1 of the ring (2) is in the range of from 0.05 to 0.4 mm, for instance, 0.1 to 0.2 mm. In a particular embodiment, the ring has a different thickness t2 at the outside, which is in the range of from 0.2 to 0.7 mm, e.g., 0.3 to 0.5 mm.

Suitable materials for the ring 2 of thermoplastic polymer include polyolefins, polycarbonate, acrylic polymers like MMA or SMMA, polyamides like nylon, SAN, SBA, and ABS. In one embodiment of the invention, the ring 2 comprises polypropylene.

The ring 2 of thermoplastic polymer comprises an IR absorber, i.e., a material which absorbs infrared light. The IR absorber is dispersed in the polymer matrix of the ring 2. Suitable IR absorbers include carbon black; inorganic pigments like Lazerflair^{®} pigments, copper phosphates or indium tin oxide (ITO); and organic pigments which have a high absorption in the wavelength range of from 700 to 1500 nm, for instance, phthalocyanines, naphthalocyanines, metal complexes of azo dyes, anthraquinones, squaric acid derivatives, immonium dyes, perylenes, quaterylenes and polymethins. Of these, phthalocyanines and naphthalocyanines are particularly suitable. Phthalocyanines and Naphthalocyanines having bulky side groups are preferred, due to their improved solubility in thermoplastic polymers.

The amount of IR absorber contained in the thermoplastic polymer of the ring 2 is not particularly restricted as long as the desired absorption of laser radiation is ensured. In one embodiment, the polymer contains from 0.1 to 5 wt.-%, e.g., from 1 to 3 wt.-% of IR absorber, relative to the total weight of the thermoplastic polymer. Mixtures of different infrared absorbers can also be used. By mixing IR absorbers having absorption maxima at different wavelengths, the skilled person can optimize the absorption in the wavelength region of the laser used for the welding step. The IR absorber is compounded into the thermoplastic polymer by processes customary in the art.

In one embodiment of the invention, a sheet of IR absorber-containing thermoplastic polymer having the desired thickness t1 is produced, and the ring 2 is cut or punched out from the sheet. In another embodiment of the invention, the ring 2 is produced from the IR absorber-containing thermoplastic polymer by way of injection molding.

The preformed ring 2 then is transferred into the end cap 1; the end cap 1 is mounted on the housing 3 and the parts are joined by laser-welding.

In another embodiment of the invention, the ring 2 and the end cap 1 are produced in a single mold, using two injection units which successively introduce the material for the end cap 1 and the ring 2, respectively. This process is called "2K molding".

In still another embodiment of the invention, the ring 2 is produced by injecting the IR absorber-containing thermoplastic polymer into a mold which already contains the end cap 1, so that the ring 2 as formed is already in its final position within the end cap 1.

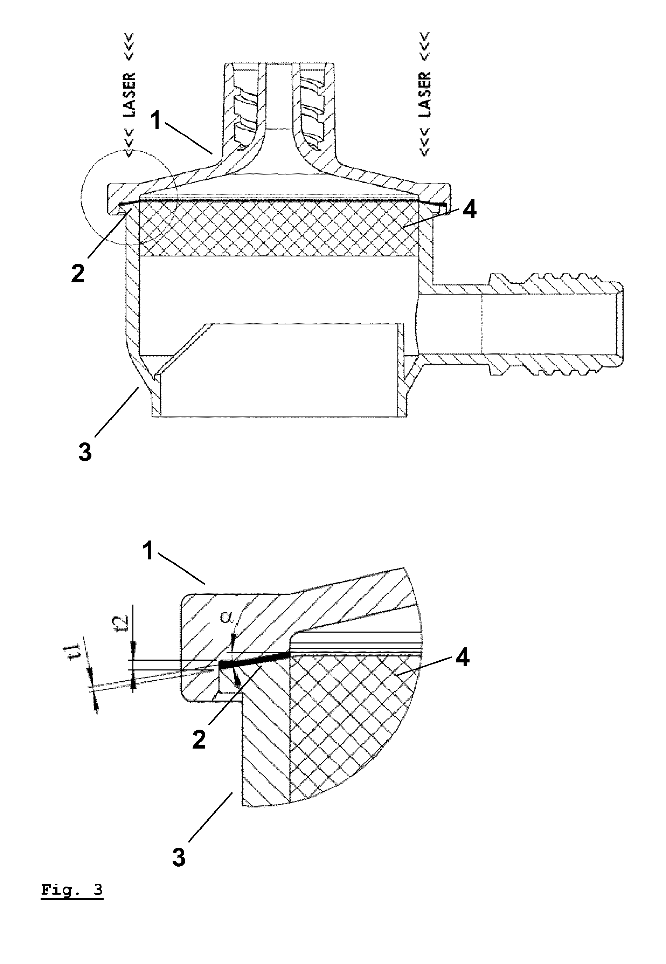

When the ring 2 is formed by injection molding, flow of the molten polymer material forming the ring 2 is facilitated when the thickness of the ring 2 is not uniform, but at its outer perimeter thickness t2 is greater than the thickness t1 at the inner perimeter. Of course, the design of the inner surface of the end cap 1 has to account for the variation in thickness of ring 2, so that no gaps are formed at the interface of tubular housing 3, ring 2, and end cap 1. An example of such an embodiment is shown in Fig. 3.

The end cap 1 comprising ring 2 subsequently is mounted on the tubular housing 3 and the tubular housing 3, the ring 2, and the end cap 1 are joined by irradiation with laser light having a wavelength in the range of from 800 nm to 1090 nm.

In one embodiment of the joining process of tubular housing 3, the ring 2, and the end cap 1, irradiation with laser light is performed by at least one laser beam moving along a perimeter of the lip of the tubular housing 3. In another embodiment of the process, the whole perimeter of the lip of the tubular housing 3 is irradiated with laser light simultaneously using ring optics. In one embodiment of the housing, the laser beam passes through the end cap 1 before reaching the ring 2. This offers the advantage that the laser light neither irradiates the hollow fibers nor the end walls 4, in which the ends of the hollow fibers are embedded, thus avoiding potential heat damage. The laser beam is absorbed by the ring 2 of thermoplastic polymer comprising an IR-absorptive material. The heat generated by the laser melts the thermoplastic polymer and creates a permanent weld, i.e. a laser-welded joint.

In one embodiment of the process, the weld seam does not extend over the whole width b of ring 2. It rather forms a circular line located within the area of the ring 2. In a particular embodiment, the weld seam is located halfway between the inner edge and the outer edge of the ring 2, so that portions of the ring 2 on either side of the weld seam are not melted during laser welding and form a barrier preventing weld flash from flowing out of the interface between the end cap 1 and the tubular housing 3. In one embodiment of the process, the width of the weld seam is smaller than the width b of the ring 2 by 0.5 to 2 mm. As an illustrative example, if the width of the weld seam is 1 mm and the width b of ring 2 is 2 mm, this leaves 0.5 mm of non-molten material forming a barrier against weld flash on either side of the weld seam.

During the joining step, the end cap 1 and the tubular housing 3 are pressed together while the laser generates the weld seam. Generally, a force in the range of from 500 to 1500 N is used to press the individual parts together. Depending on the diameter of the end cap 1 and the area the force is applied to, this translates to pressures in the range of from 1 to 5 N/mm².

Examples of suitable lasers for the laser-welding step include semiconductor diode lasers having wavelengths in the range of 800 nm to 980 nm; and solid state lasers (e.g., fiber lasers or Nd:YAG lasers) having wavelengths in the range of from 1060 to 1090 nm. Depending on the materials, the thickness of ring 2, and the desired welding speed, optical power levels of the laser range from 1W to 200W, e.g., from 20 to 100 W, for instance, 30 to 80 W.

In one embodiment of the process, the diameter of the focal spot of the laser beam is in the range of from 0.5 mm to 2 mm, for instance 0.8 mm to 1.5 mm.

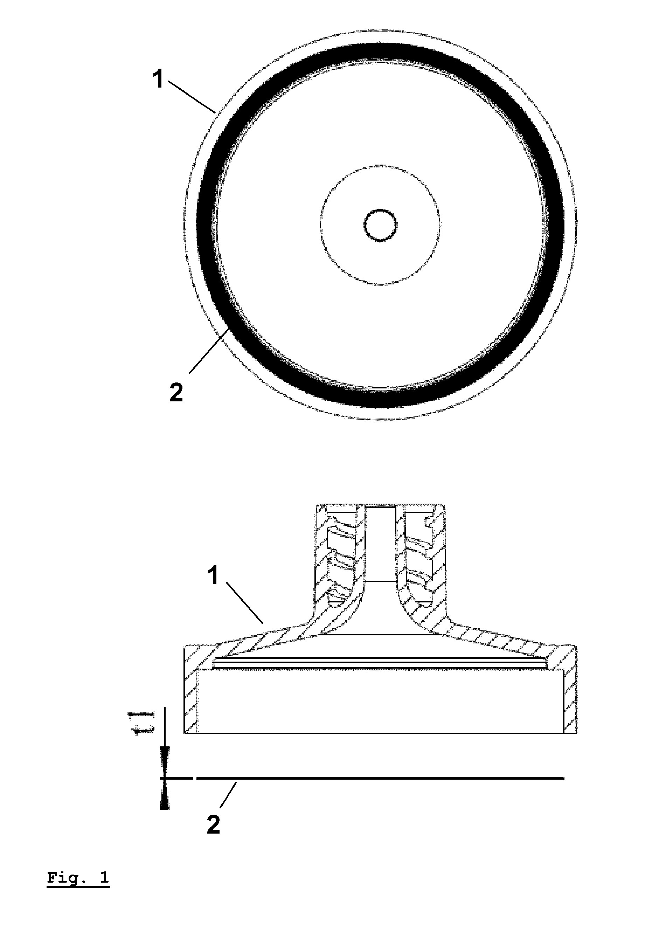

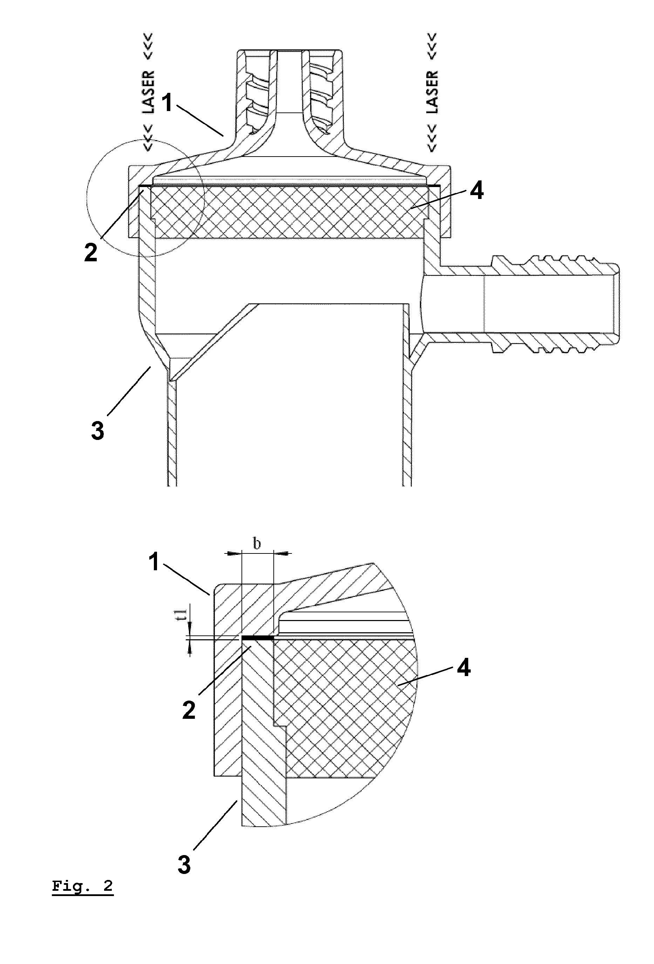

Figure 1 shows a bottom view and an exploded cross-sectional view of an end cap 1 of the dialyzer of the invention with a ring 2 of a thermoplastic polymer comprising an IR-absorptive material. A cross-sectional partial view and a detail view of a dialyzer with the end cap 1 mounted on a housing 3 is shown in figure 2. The ring 2 of thermoplastic polymer comprising an IR-absorptive material has thickness t1 and width b. Also shown is end wall 4 which seals the blood compartment defined by the end caps and the lumen of the hollow fibers in the dialyzer (not shown) from the dialysate compartment defined by the housing 3 and the outer surface of the hollow fibers.

Another embodiment of the dialyzer of the invention is shown in figure 3. Again, a cross-sectional partial view and a detail view of a dialyzer with the end cap 1 mounted on a housing 3 is shown. The ring 2 of thermoplastic polymer comprising an IR-absorptive material has thickness t1 at its inner edge and thickness t2 at its outer edge. The upper rim of housing 3 is sloping downward from the inside to the outside at an angle α.

It will be understood that the features mentioned above and those described hereinafter can be used not only in the combination specified but also in other combinations or on their own, without departing from the scope of the present invention.

## Claims

1. A capillary dialyzer comprising a tubular housing (3) and an end cap (1) sealing a mouth of the tubular housing (3), wherein an IR-absorptive material is present at an interface of a lip of the tubular housing (3) and the end cap (1).

2. The capillary dialyzer of claim 1, wherein the IR-absorptive material comprises an IR-absorptive pigment selected from the group consisting of carbon black; IR-absorptive inorganic pigments; and IR-absorptive organic pigments.

3. The capillary dialyzer of claim 2, wherein the IR-absorptive material comprises a phthalocyanine.

4. The capillary dialyzer of claim 2, wherein the IR-absorptive material comprises carbon black.

5. The capillary dialyzer of any one of claims 1 to 4, wherein a weld seam is present at the interface of the lip of the tubular housing (3) and the end cap (1); and the weld seam comprises the IR-absorptive material.

6. The capillary dialyzer of any one of claims 1 to 5, wherein the tubular housing (3) and the end cap (1) are comprised of a polyolefin.

7. The capillary dialyzer of any one of claims 1 to 6, wherein the lip of the tubular housing (3) forms an edge having a width greater than a wall thickness of tubular housing (3).

8. The capillary dialyzer of any one of claims 1 to 7, wherein the lip of the tubular housing (3) is sloping downward from the inside of the tubular housing (3) towards its outside at an angle (α) of from 5° to 15°.

9. A process for producing a capillary dialyzer, comprising:
a) providing a tubular housing (3) and an end cap (1) configured to seal a mouth of the tubular housing (3);
b) providing a ring (2) of a thermoplastic polymer comprising an IR-absorptive material, the ring (2) being configured to span an interface of a lip of the tubular housing (3) and the end cap (1) when the end cap (1) is mounted on tubular housing (3);
c) assembling the end cap (1), the ring (2), and the tubular housing (3), so that the end cap (1) seals a mouth of the tubular housing (3) and that the ring (2) spans the interface of the lip of the tubular housing (3) and the end cap (1) ;
d) joining the tubular housing (3), the end cap (1) and the ring (2) by irradiation with laser light having a wavelength in the range of from 800 nm to 1090 nm.

10. The process of claim 9, wherein irradiation with laser light is performed by at least one laser beam moving along a perimeter of the lip of the tubular housing (3).

11. The process of claim 10, wherein the laser beam passes through the end cap (1) before reaching the ring (2) of a thermoplastic polymer comprising an IR-absorptive material.

12. The process of any one of claims 9 to 11, wherein the thickness (t1) of the ring (2) is in the range of from 0.05 to 0.4 mm.

13. The process of any one of claims 9 to 12, wherein the width (b) of the ring (2) is in the range of from 0.5 mm to 5 mm.

14. The process of any one of claims 9 to 13, wherein the focal spot diameter of the laser beam is in the range of from 0.5 mm to 1.5 mm.
